# EUROPEAN PATENT APPLICATION

(11) **EP 3 599 540 A1**
(43) Date of publication of application: **29.01.2020**
(21) Application number: 19177722.6
(22) Date of filing: 31.05.2019
(51) Int. Cl.: G06F 3/01

(54) **ROBOT INTERACTION SYSTEM AND METHOD**

(30) Priority: 24.07.2018 GB 201812017
(71) Applicant: Sony Interactive Entertainment Inc., Tokyo 108-0075 (JP)
(72) Inventor: CAPPELLO, Fabio, London, W1F 7LP (GB)
(74) Representative: D Young & Co LLP

(57) **Abstract**

A system, mountable upon a user's body, for simulating interaction with a virtual environment, the system comprising a communication unit operable to receive information relating to operation of the system, and an interactive element operable to simulate contact with a virtual surface in the virtual environment by moving relative to the user's body in dependence upon the received information.

## Description

This disclosure relates to a robot interaction system and method.

In the past, traditional input devices, such as gamepads or mice and keyboards, have been successful at providing a suitable level of interaction between a user and interactive content, such as games or applications. However, such input devices have in many cases not adapted sufficiently with advances in other technology, such as processing or display hardware. For example, standard input devices may not be suitable when seeking to provide an immersive interactive experience in conjunction with a head-mountable display device (HMD) in a virtual reality (VR) arrangement. The use of an input device that is not suitable for such an application may have a detrimental effect on a user's enjoyment of such an experience.

In order to address this problem, numerous solutions have been proposed. In some examples, it is considered that it is preferable to not use an input device at all. For example, camera-based tracking (or alternative methods) may be used to generate inputs by a user that can be used to interact with a virtual environment or the like. However, a drawback associated with these tracking arrangements is that of a lack of physical feedback provided to a user - a user may perform gestures corresponding to picking up a cup, for example, but due to not actually making contact with a cup the motion there may be a break in the immersion experienced by the user.

An alternative approach is to provide a plurality of different input devices or attachments for modifying the shape and/or size of an input device in order to increase the number of objects that the input device may represent. While this may assist with maintaining a sense of immersion for a user, it can lead to an increased cost of the device that may be prohibitive for some user's enjoyment. In addition to this, the interaction may still not feel entirely natural to a user - the physical feedback from the input device may not match that which is expected by a user, for example due to differences in the weight of the input device and a corresponding virtual object.

There is therefore a need for an input method that enables a sense of immersion to be experienced when interacting with VR content.

It is in the context of the above problems that the present invention arises.

This disclosure is defined by claim 1.

Further respective aspects and features of the disclosure are defined in the appended claims.

Embodiments of the present invention will now be described by way of example with reference to the accompanying drawings, in which:
Figure 1 is a schematic diagram showing front and rear elevations of a robot, in accordance with embodiments of the present invention;
Figure 2 is a schematic diagram showing front and rear elevations of points of articulation of a robot, in accordance with embodiments of the present invention;
Figure 3 is a schematic diagram illustrating degrees of freedom at respective points of articulation of a robot, in accordance with embodiments of the present invention;
Figure 4 is a schematic diagram of a control system for a robot, in accordance with embodiments of the present invention;
Figure 5 is a schematic diagram of an interactive robot system in accordance with embodiments of the present invention;
Figure 6 schematically illustrates a robot for user interaction;
Figure 7 schematically illustrates an interaction element;
Figure 8 schematically illustrates a plurality of states of the robot;
Figure 9 schematically illustrates a system for simulating interaction in a virtual environment;
Figure 10 schematically illustrates a method for simulating interaction in a virtual environment.

A robot platform 100 for implementing embodiments of the present invention may take the form of any suitable robotic device, or simulation of a robotic device, as applicable.

The robot platform may have any suitable physical features. Hence movement, where required, may be achieved by wheels, tracks, articulated limbs, internal mass displacement or any other suitable means. Manipulation, where required, maybe achieved by one or more of a mechanical hand, pincer or any other hooking or gripping system, such as a suction or electromagnetic attachment mechanism or a hook or clip, and any further optional articulation such as one or more jointed arms. Vision, where required, may be achieved by optical camera and/or infra-red camera/detector, mounted on the robot and/or located within the environment navigated by the robot. Other situational awareness systems such as ultrasound echolocation, or detection of metal tracks and/or electrically charged tracks, and proximity systems such as whiskers coupled to sensors, or pressure pads, may also be considered. Control of the robot may be provided by running suitable software instructions on a processor of the robot and/or a processor of a remote computer communicating with the robot, for example via a wireless protocol.

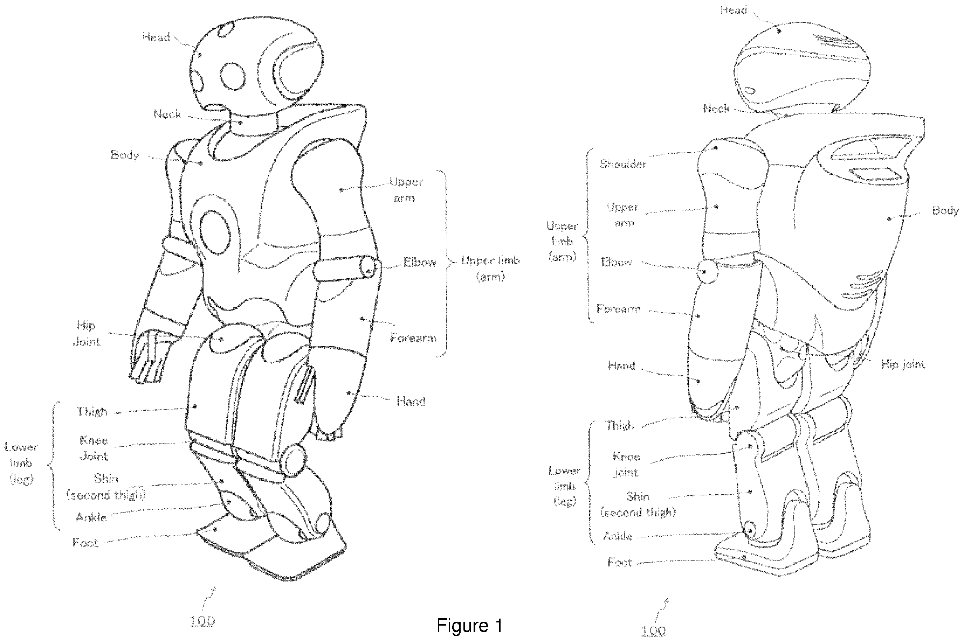

Figure 1 illustrates front and rear views of an exemplary legged locomotive robot platform 100. As shown, the robot includes a body, head, right and left upper limbs, and right and left lower limbs for legged movement. A control unit 80 (not shown in Figure 1) within the body provides a control system for the robot.

Each of the right and left lower limbs includes a thigh, knee joint, second thigh (calf/shin), ankle and foot. The lower limb is coupled by a hip joint to the bottom of the trunk. Each of the right and left upper limb includes an upper arm, elbow joint and forearm. The upper limb is coupled by a shoulder joint to each upper edge of the trunk. Meanwhile, the head is coupled by a neck joint near to the upper end centre of the trunk.

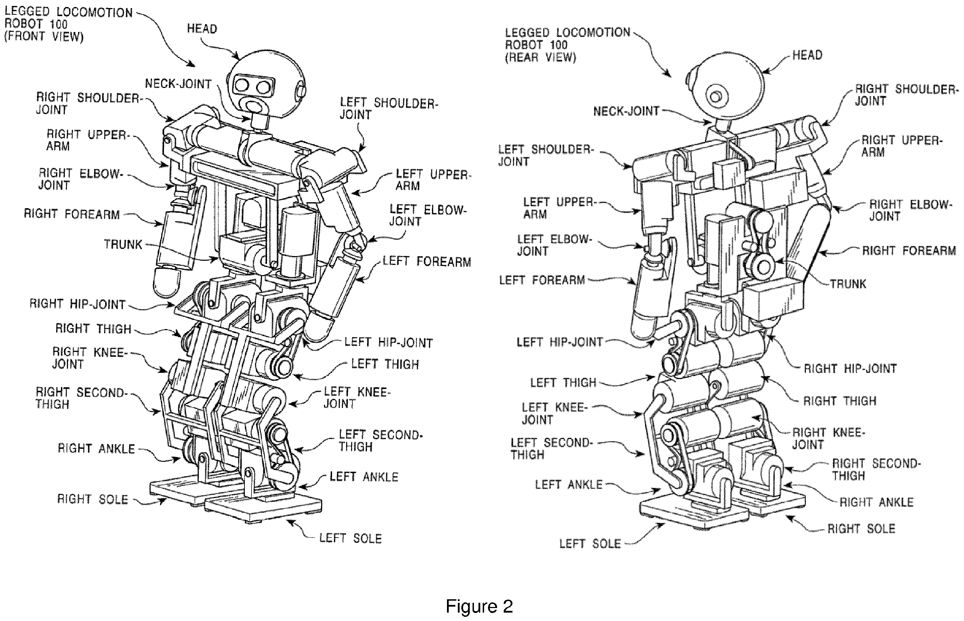

Figure 2 illustrates front and rear views of the robot, showing its points of articulation (other than the hands).

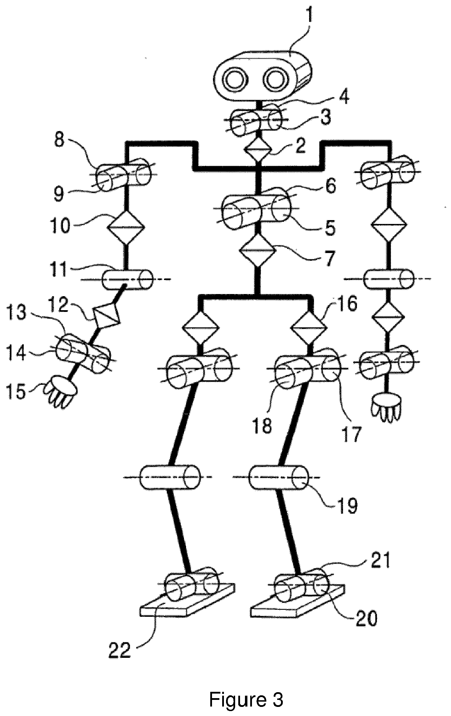

Figure 3 then illustrates the degrees of freedom available for each point of articulation.

Referring to these Figures, a neck joint for supporting the head 1 has 3 degrees of freedom: a neck-joint yaw-axis 2, a neck-joint pitch-axis 3, and a neck-joint roll-axis 4. Meanwhile each arm has 7 degrees of freedom; a shoulder-joint pitch-axis 8, a shoulder-joint roll-axis 9, an upper-arm yaw-axis 10, an elbow-joint pitch-axis 11, a forearm yaw-axis 12, a wrist-joint pitch-axis 13, a wrist-joint roll-axis 14, and a hand 15. Typically the hand 15 also has a multi-joints multi-degrees-of-freedom structure including a plurality of fingers. However, these are omitted for simplicity of explanation. The trunk has 3 degrees of freedom; a trunk pitch-axis 5, a trunk roll-axis 6, and a trunk yaw-axis 7. Each leg constituting the lower limbs has 6 degrees of freedom; a hip-joint yaw-axis 16, a hip-joint pitch-axis 17, a hip-joint roll-axis 18, a knee-joint pitch-axis 19, an ankle-joint pitch-axis 20, an ankle-joint roll-axis 21, and a foot 22. In the exemplary robot platform, the cross point between the hip-joint pitch-axis 17 and the hip-joint roll-axis 18 defines a hip-joint location of the legged walking robot 100 according to the embodiment. Again for simplicity it is assumed that the foot itself has no degrees of freedom, but of course this is non-limiting. As a result the exemplary robot 100 has 32 (= 3 + 7 x 2 + 3 + 6 x 2) degrees of freedom in total. It will be appreciated however that this is merely exemplary, and other robot platforms may have more or fewer degrees of freedom.

Each degree of freedom of the exemplary legged locomotive robot platform 100 is implemented by using an actuator. For example, a small AC servo actuator that is directly coupled to a gear and that houses a one-chip servo-system may be used, although any suitable actuator may be considered, such as a linear servo, electroactive polymer muscle, pneumatic, piezoelectric, or the like.

It will be appreciated that any desired action that the robot platform is capable of may be implemented by control signals issued by a control system to one or more of the actuators of the robot (or to simulated actuators in a simulation, as applicable), to adjust the pose of the robot within its available degrees of freedom.

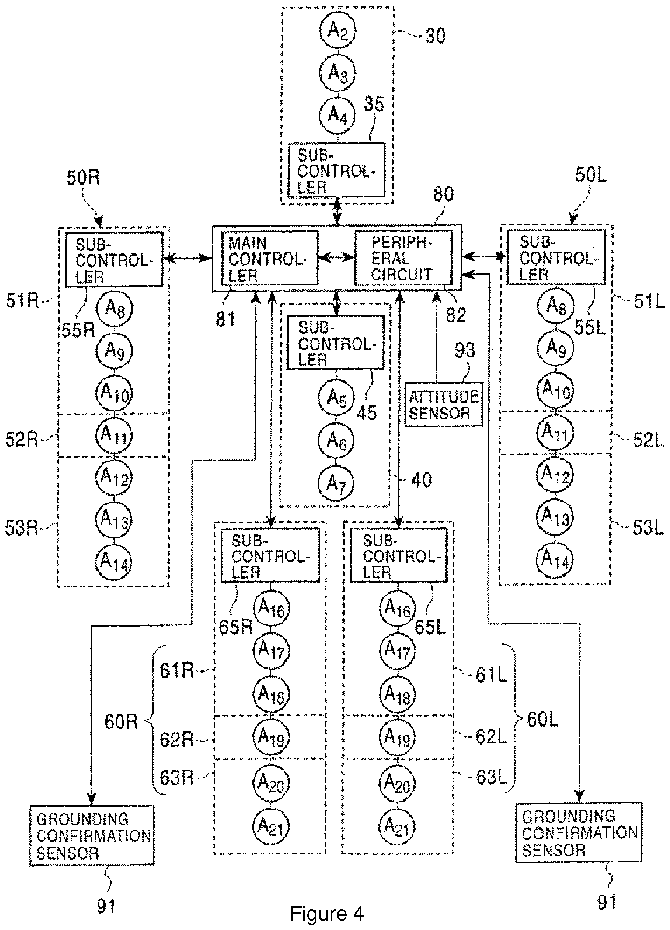

Figure 4 schematically illustrates an exemplary control system for the robot platform 100.

A control unit 80 operates to co-ordinate the overall motion / actions of the robot. The control unit 80 has a main control unit 81 including main circuit components (not shown) such as a CPU (central processing unit) and a memory, and typically a periphery circuit 82 including an interface (not shown) for sending and receiving data and/or commands to and from a power supply circuit (not shown) and each component of the robot. The control unit may comprise a communication interface and communication device for receiving data and/or commands by remote-controlling. The control unit can be located anywhere suitable within the robot.

As shown in Figure 4, the robot has logical units 30 (head), 40 (torso), and 50R/L and 60R/L each representing the corresponding one of four human limbs. The degrees-of-freedom of the robot 100 shown in Fig. 3 are implemented by the corresponding actuator within each unit. Hence the head unit 30 has a neck-joint yaw-axis actuator A2, a neck-joint pitch-axis actuator A3, and a neck-joint roll-axis actuator A4 disposed therein for representing the neck-joint yaw-axis 2, the neck-joint pitch-axis 3, and the neck-joint roll-axis 4, respectively. Meanwhile the trunk unit 40 has a trunk pitch-axis actuator A5, a trunk roll-axis actuator A6, and a trunk yaw-axis actuator A7 disposed therein for representing the trunk pitch-axis 5, the trunk roll-axis 6, and the trunk yaw-axis 7, respectively. Similarly the arm units 50R/L are broken down into upper-arm units 51R/L, elbow-joint units 52R/L, and forearm units 53R/L. Each of the arm units 50R/L has a shoulder-joint pitch-axis actuator A8, a shoulder-joint roll-axis actuator A9, an upper-arm yaw-axis actuator A10, an elbow-joint pitch-axis actuator A11, an elbow-joint roll-axis actuator A12, a wrist-joint pitch-axis actuator A13, and a wrist-joint roll-axis actuator A14 disposed therein for representing the shoulder-joint pitch-axis 8, the shoulder-joint roll-axis 9, the upper-arm yaw-axis 10, the elbow-joint pitch-axis 11, an elbow-joint roll-axis 12, the wrist-joint pitch-axis 13, and the wrist-joint roll-axis 14, respectively. Finally the leg units 60R/L are broken down into thigh units 61R/L, knee units 62R/L, and second-thigh units 63R/L. Each of the leg units 60 R/L has a hip-joint yaw-axis actuator A16, a hip-joint pitch-axis actuator A17, a hip-joint roll-axis actuator A18, a knee-joint pitch-axis actuator A19, an ankle-joint pitch-axis actuator A20, and an ankle-joint roll-axis actuator A21 disposed therein for representing the hip-joint yaw-axis 16, the hip-joint pitch-axis 17, the hip-joint roll-axis 18, the knee-joint pitch-axis 19, the ankle-joint pitch-axis 20, and the ankle-joint roll-axis 21, respectively. Optionally the head unit 30, the trunk unit 40, the arm units 50, and the leg units 60 may have sub-controllers 35, 45, 55, and 65 for driving the corresponding actuators disposed therein.

Hence by issuing appropriate commands, the main controller (81) can control the driving of the joint actuators included in the robot 100 to implement the desired action. For example, the controller may implement a walking action by implementing successive phases, as follows:
(1) Single support phase (left leg) with the right leg off the walking surface;
(2) Double support phase with the right foot touching the walking surface;
(3) Single support phase (right leg) with the left leg off the walking surface; and
(4) Double support phase with the left foot touching the walking surface.

Each phase in turn comprises the control of a plurality of actuators, both within the relevant leg and potentially elsewhere in the robot, for example moving the opposing arm and/or attitude of the torso to maintain the centre of gravity of the robot over the supporting foot or feet.

Optionally, to detect the manner and/or extent of a physical interaction with an object and/or the environment, physical sensors may be provided.

Hence in the exemplary robot, the feet 22 have grounding detection sensors 91 and 92 (e.g. a proximity sensor or microswitch) for detecting the grounding of the feet 22 mounted on legs 60R and 60L respectively, and the torso is provided with an attitude sensor 93 (e.g. an acceleration sensor and/or a gyro-sensor) for measuring the trunk attitude. Outputs of the grounding detection sensors 91 and 92 are used to determine whether each of the right and left legs is in a standing state or a swinging state during the walking action, whilst an output of the attitude sensor 93 is used to detect an inclination and an attitude of the trunk. Other sensors may also be provided, for example on a gripping component of the robot, to detect that an object is being held.

The robot may also be equipped with sensors to provide additional senses. Hence for example the robot may be equipped with one or more cameras, enabling the control unit (or a remote system to which sensor-based data is sent) to recognise a user of the robot, or a target object for retrieval. Similarly one or more microphones may be provided to enable voice control or interaction by a user. Any other suitable sensor may be provided, according to the robot's intended purpose. For example, a security robot intended to patrol a property may include heat and smoke sensors, and GPS.

Hence more generally, a robot platform may comprise any suitable form factor and comprise those degrees of freedom necessary to perform an intended task or tasks, achieved by the use of corresponding actuators that respond to control signals from a local or remote controller that in turn operates under suitable software instruction to generate a series of control signals corresponding to a performance of the intended task(s).

In order to provide software instruction to generate such control signals, a robot software development system may be provided for developing control sequences for desired actions, and/or for developing decision making logic to enable the robot control system to respond to user commands and/or environmental features.

As part of this development system, a virtual robot (i.e. a simulation) may be used in order to simplify the process of implementing test software (for example by avoiding the need to embed test software within robot hardware that may not have simple user-serviceable parts, or to simulate an environment or action where a mistake in the software could damage a real robot). The virtual robot may be characterised by the dimensions and degrees of freedom of the robot, etc., and an interpreter or API operable to respond to control signals to adjust the state of the virtual robot accordingly.

Control software and/or scripts to use with such software may then be developed using, and to use, any suitable techniques, including rule based / procedural methods, and/or machine learning / neural network based methods.

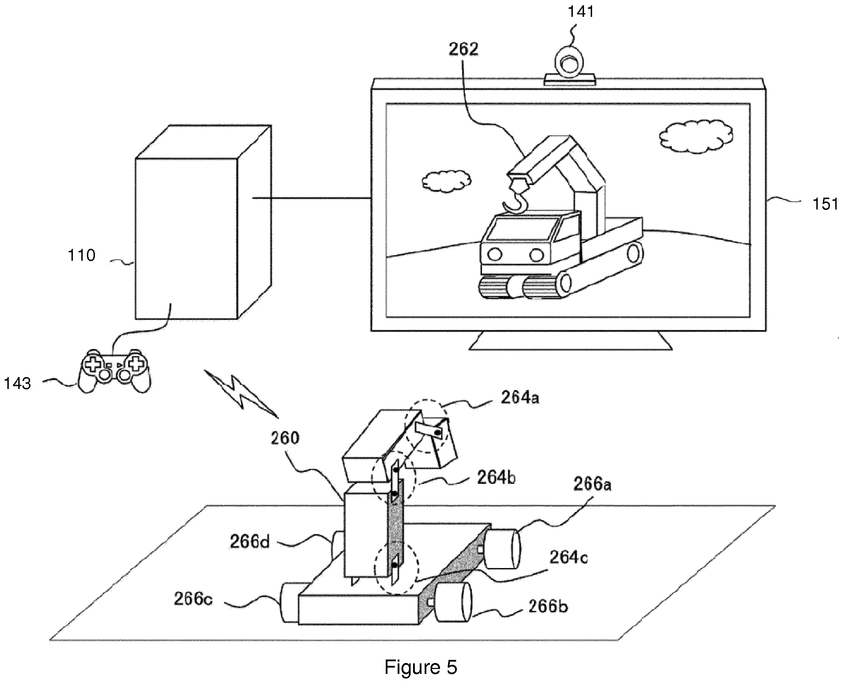

Referring to Figure 5, in an exemplary usage scenario a (toy) real robot crane 260 and a corresponding simulation (virtual robot crane 262) interact for entertainment purposes, for example mirroring each other's actions or behaving in a complementary manner, and/or using sensor data from the real or virtual robot to control actions of the other. The virtual robot may be graphically embellished compared to the real robot, for example having a face, or resembling an object or creature only approximated by the real robot.

In this example, the robot platform 260 has motorised wheels 266a-d and one articulated arm with actuators 264a-c. However it will be appreciated that any suitable form factor may be chosen, such as for example the humanoid robot 100 of Figure 1, or a dog-shaped robot (not shown) or a spheroidal robot (not shown).

In Figure 5, control of both the virtual and real robots is performed by a general purpose computer (110) operating under suitable software instructions, such as the Sony® PlayStation 4®. A user can interact with the PlayStation and hence optionally indirectly interact with one or both of the real and virtual robots using any suitable interface, such as a videogame controller 143. The PlayStation can detect the state of the real robot by receiving telemetry and other status data from the robot, and/or from analysis of an image of the real robot captured by a video camera 141. Alternatively or in addition the PlayStation can assume the state of the real robot based on expected outcomes of the commands sent to it. Hence for example, the PlayStation may analyse captured images of the real robot in expected final poses to determine its positon and orientation, but assume the state of the robot during intermediate states such as transitions between poses.

In the example scenario, the user provides inputs to control the real robot via the PlayStation (for example indicating an amount and direction of travel with one joystick, and a vertical and horizontal position of the arm end with another joystick). These inputs are interpreted by the PlayStation into control signals for the robot. Meanwhile the virtual simulation of the robot may also be controlled in a corresponding or complementary manner using the simulation technique described above, according to the mode of play.

Alternatively or in addition, the user may directly control the real robot via its own interface or by direct manipulation, and the state of the robot may be detected by the PlayStation (e.g. via image analysis and/or telemetry data from the robot as described previously) and used to set a corresponding state of the virtual robot.

It will be appreciated that the virtual robot may not be displayed at all, but may merely act as a proxy for the real robot within a virtual environment. Hence for example the image of the real robot may be extracted from a captured video image and embedded within a generated virtual environment in an augmented reality application, and then actions of the real robot can be made to appear to have an effect in the virtual environment by virtue of those interactions occurring with a corresponding virtual robot in the environment mirroring the state of the real robot.

Alternatively, a virtual robot may not be used at all, and the PlayStation may simply provide control and/or state analysis for the real robot. Hence for example the PlayStation may monitor the robot via the camera, and cause it to pick up a ball or other target object placed within the camera's field of view by the user.

Hence more generally, a robot platform may interact with a general purpose computer such as the Sony ® PlayStation 4 ® to obtain a series of control signals relating to setting a state of the robot, for the purposes of control by a user and/or control by the PlayStation to achieve a predetermined task or goal. Optionally the state, task or goal may be at least in part defined within or in response to a virtual environment, and may make use of a simulation of the robot.

While robots may be configured so as to be free-standing arrangements that are operable to move freely using locomotive elements such as legs or wheels, in some cases such movement may not be possible. It is considered in the present application that a robot may be mountable upon parts of a user's body, such as the arm, hand, leg or foot. The motion of the robot as a whole would therefore be largely dictated by the movement of the user's body.

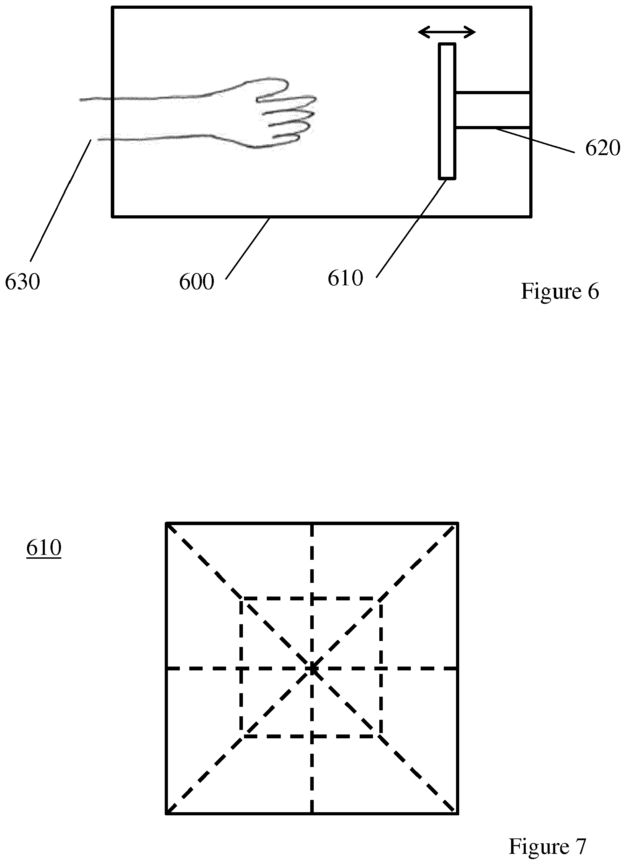

Figure 6 schematically illustrates an example of such an arrangement. In this Figure, a robot 600 is mounted upon a user's arm 630 - although a robot that was suitably modified could of course be mounted upon any part of a user's body. Such an arrangement may be advantageous in that it may provide a low-latency interaction (due to the guaranteed proximity of the robot 600 to the user) method for increasing the sense of immersion experienced by a user of a VR experience.

The method of attachment used to secure the robot 600 to the user's arm 630 may be selected freely by the skilled person - examples of suitable attachment means include straps that secure the robot 600 to the user's arm 630, or designing the robot 600 to enclose the user's whole arm or forearm (or a substantial portion of the arm or forearm), for example using the elbow as an anchor point.

The robot 600 comprises an interactive element 610 (so-called as it is the portion of the robot 600 with which the user interacts) and a corresponding actuation element 620 used to vary the location of the interactive element 610 with respect to the robot 600. The interactive element 610 is used to provide an interaction with the user, for example so as to simulate contact with a surface in a virtual environment that is displayed to the user.

The interactive element 610 may be any suitable surface for providing an interaction with the user's hand. For example, a plastic or metal plate may be provided. Alternatively, or in addition, an interactive element 610 may be provided that enables increased functionality rather than being a simple plate.

The actuation element 620 is shown as a piston-style element in Figure 6 that is configured to translate the interactive element 610 in an axial direction along the robot 600, however any suitable element may be used. For example, it may be preferable in some embodiments to use an element that enables translational and/or rotational movement of the interactive element 610. In some embodiments, the actuation element 620 may be replaced with elements on the sides of the robot 600 that are operable to cause the motion of the interactive element 610, for example, such as a cam-belt arrangement on one or both sides of the interactive element, affixed thereto and movable via one or more motors so that the interactive element can be driven axially forward or backward in response to motor direction.

Additional components may be provided as a part of the robot 600; for example, processing elements may be provided in order to provide additional functionality. In some embodiments a communication unit may be provided that is operable to receive instructions relating to the operation of the robot 600 (for example, instructions relating to the position of the interactive element 610). The robot may also integrate or provide housing for another control input, such as a PlayStation Move controller. Referring to Figure 6, the robot may comprise an aperture through which the Move controller may be passed, into the grasp of the user's hand. The illuminated portion of the move controller may then remain external to the robot. The robot may comprise a channel extending from the aperture and/or receptacle on an inner part of the opposing wall, to optionally restrain and/or seat such a controller so that it acts like a grip bar within the robot. Conversely, the robot may comprise one or more attachment means (such as hoops or straps) so that it attached to a Move controller or similar, making the robot actively hand-held rather than passively attached to the user's arm.

While the robot 600 of Figure 6 is shown as entirely enclosing the user's arm, such a feature is not required. By utilising different mounting methods and structures, arrangements may be provided in which the user may freely interact with objects other than the robot 600 even when the robot 600 is mounted upon the user's body.

In embodiments of the present application, the position of the interactive element 610 is determined so as to correspond to the position of surface in a virtual environment. This position may be determined relative the hand of a user's avatar in the virtual environment, for example, or the position of virtual hands in the virtual environment corresponding to the position of the user's real hands in the real world.

Of course, the range of motion of the interactive element 610 is limited by the size of the robot 600 - however, it is apparent that the actual distance of the interactive element 610 is unimportant in many cases. For instance, once the interactive element 610 is out of reach of the user then the distance does not matter - for the purposes of providing a representative interaction it does not matter whether the interactive element 610 is 10 centimetres away or 10 metres away, as the user cannot interact with it in either case. It is therefore apparent that the same interactive element 610 position may be used to represent any number of virtual separation distances between a user and a virtual surface.

Figure 7 schematically illustrates an example of an interactive element 610. In this example, the interactive element 610 is a square plate, although of course other shapes may be preferable in some embodiments, such as for example a circular plate if the robot is cylindrical. The interactive element 610 may comprise a number of suitable features in order to provide a more immersive or otherwise improved user experience, a number of which are discussed below and may be implemented either alone or in any suitable combination.

As shown using dashed lines in Figure 7, the interactive element 610 may comprise one or more foldable portions. This may be useful in providing a different shape for a user's interaction, and may also be used so as to mimic a deformation of a virtual object as a result of the interaction. For example, if a user punched a soft or fragile object in the real world then they would expect to be able to feel the deformation - if the interactive element 610 stays flat then this may cause a loss of immersion for the user as the interaction with the interactive element 610 would not accurately represent the expected real-world interaction.

The folds may take the form illustrated in Figure 7, but this is non-limiting. For example, the folds may form one or more vertical hinges so that the effective width of the interactive element is controllably variable. Optionally, one or more holes may also be provided in the plate. In this way, when the plate is flat, it predominantly acts as a physical barrier corresponding to a virtual barrier (for example, to feel like pushing upon a virtual door), but when folded, could feel like an object being picked up, or, with the presence of one or more holes, like a gun handle with a trigger. Indeed, optionally a trigger button could be placed behind the plate, allowing control of firing a gun in-game - the robot could further be controlled so as to provide the sensation of a gun recoil in response to the use of the trigger.

Folding could be implemented for example by the use of solenoids, or the use of electromagnets to selectively hold parts of the plate back as the piston / actuator moves it forwards, causing the folds to form. Other known folding mechanisms may be similarly considered.

As noted above, it may be advantageous for the interactive element 610 to be able to adopt a variety of different shapes. In addition to folding elements, it may be possible that the interactive element 610 comprises one or more inflatable elements, or any other element that may be suitable for implementing a change in shape of the interactive element 610. The use of inflatable elements may be further advantageous in that an apparent hardness of the interactive element 610 may be modified so as to more closely mimic an expected hardness of a virtual surface, or the use of springs or the like.

Other modifications may be provided to further adapt the operation of the robot 600 in order to simulate different surfaces. For example, the force of impact may be modified by moving the interactive element 610 towards the user's hand more slowly or more quickly.

In some embodiments, the interactive element 610 may have other properties that are modifiable in dependence upon the content of the virtual environment. For example, a cooling or warming effect may be applied to the interactive element 610 so as to simulate a hot or cool target.

The above discussion provides a number of examples of ways in which the interactive element 610 is operable to be reconfigured to simulate properties of the virtual surface, such that the reconfiguration comprises a change of one or more of the shape, size, and/or orientation of the part of the interactive element 610 that is presented to the user. It should be apparent that the interactive element 610 is also operable to be reconfigured further in response to a user interaction with the virtual surface and/or interactive element - for example, if the user performs an in-game action or in the case that the interactive element 610 is reshaped to simulate an appropriate impact.

In some embodiments, the robot 600 may comprise a fan or other mechanism for generating a flow of air. The use of a flow of air may be used to increase a sense of immersion for a user by mimicking the flow of air that would be expected when moving the hand. This is an example of an air flow generation unit operable to generate an air flow within the system in response to the received information and/or detected motion of the robot.

While the above description has been provided with respect to a system that utilises an interactive element that is moved with an actuator, it would also be considered that the whole of the robot may instead be moved. This would mean that the interactive element described above would instead be stationary with respect to the robot, and that the whole robot moves with respect to the user's hand. In effect, it is possible that the motion is performed in any of a number of ways, so long as there is a relative motion generated between the element with which the user interacts and the user's hand (or other body part, if mounted elsewhere). In some embodiments, it is considered that more than one style of motion may be possible in dependence upon the expected interaction.

An example of such an arrangement may be if the robot is clamped to a Move controller by spacers so that it is not in contact with the user's hand/fist when they grip the controller, and moves into contact with the user's hand/fist by moving with respect to the spacers (or moving in part, for example by activating an interaction element).

To provide a further example of the implementation of an embodiment in which the whole robot is configured to move, a two-part system is envisaged. For example, a sleeve may be worn by a user, to which the rest of the robot attaches, and the robot may be operable to move relative to the sleeve (and therefore the user's arm). Of course, other embodiments may enable similar functionality with a different robot form.

In some embodiments, the robot may comprise transparent walls and/or inwards-facing cameras so as to enable the detection of hand motion by the user. This may enable the use of gestures, so that the user may still provide inputs via hand motion even when using the robot. In some embodiments, the tracking processing (and gesture identification) may be performed by the robot itself; alternatively, or in addition, processing (or a portion of the processing) may be performed by an associated processing device or the like. If processing is performed externally, sensor information (such as raw images) or processed data is transmitted to the external device.

In some embodiments, the robot may be operable to open to enable a user to interact with external objects. For example, the front of the robot (that is, the portion of the robot in front of the user's hand which comprises the interactive element) may be configured to flip up or otherwise move so as to enable the user to pick up objects or press buttons. In some embodiments, this may be performed in response to a user input. Alternatively, or in addition, this may be performed in response to instructions from an associated device - an example of this is when an HMD is put into a see-through mode (one that enables the user to see the outside world instead of VR content) then the robot is configured to automatically enable the user to interact with external objects. These are examples of one or more elements that may be controlled to allow a user to interact with external objects directly.

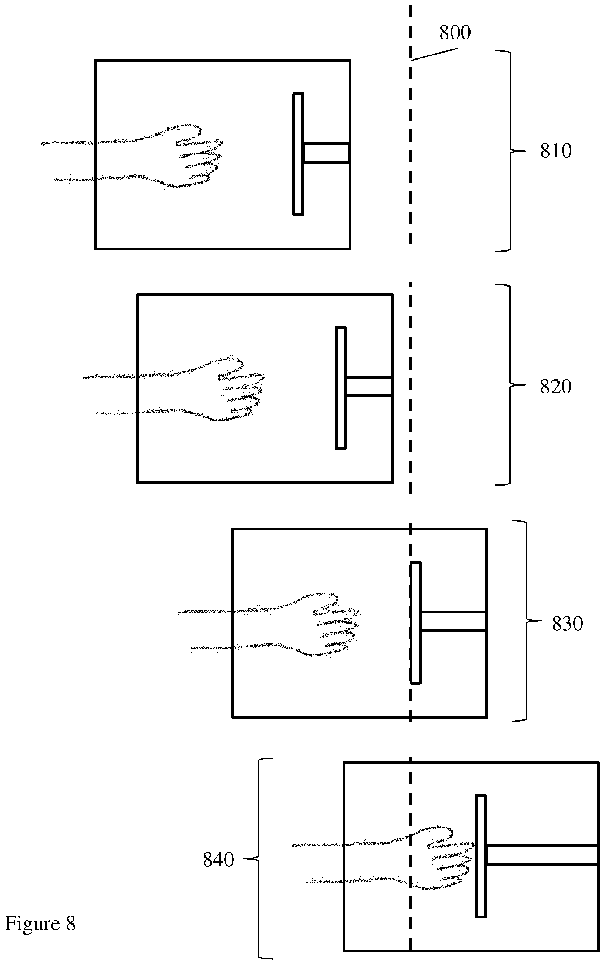

Figure 8 schematically illustrates four exemplary states of a robot 600 when in use, wherein the location of the robot 600 varies with respect to a virtual surface 800 in the virtual environment. Of course, the location of the robot 600 in this case may instead be taken to mean the location of the user's hand (and by extension, the robot 600), and/or the location of corresponding virtual elements in the virtual environment.

In the first state 810, the user is far enough from the virtual surface 800 in the virtual environment that the interactive element retains a default position in which the user is not able to interact with it.

In the second state 820 the user is closer to the virtual surface 800, but still has not made contact. The interactive element may therefore retain its default position, as in state 810.

In the third state 830 the user has still not made contact with the virtual surface 800. However, the user has moved to be sufficiently close to the virtual surface that the distance between the user's hand and the virtual surface 800 is smaller than that of the distance between the user's hand and the default position of the interactive element. As a result of this, the interactive element may be controlled so as to adopt a position relative to the user's hand that mimics the relative positions of the user's hand (or a corresponding virtual element) and the virtual surface 800 in the virtual environment.

The state 830 may be applied until the user makes contact with the virtual surface 800 in the virtual environment, in that the interactive element continues to mimic the expected location with respect to the virtual surface 800.

In the fourth state 840, the user has pushed through the virtual surface 800. While this may be prevented in some embodiments, for example by game code preventing the user's virtual avatar from pushing through the surface 800, in other embodiments it may be entirely possible. In this example, the interactive element has remained stationary once it makes contact with the user's hand despite the fact that the user's hand has passed through the area corresponding to the virtual surface 800.

Of course, the speed at which the interactive element approaches the user's hand may be tied to the virtual interaction between the user and the virtual surface - for example, the speed at which the user's in-game hand approaches an in-game wall. The force with which the interactive element hits the user's body may be proportional to this speed, or some other measure of force. For example, the force of impact may be defined based upon the virtual environment (such as a diminished force of impact if the user is underwater in the virtual environment).

In some embodiments, the robot may be configured in such a way that the interactive element may be able to prevent the user's hand from moving any further - this may require an anchoring of the robot at the user's elbow or the like, however. In such an embodiment, it is also considered that the interactive element may yield to the user's hand slowly in order to simulate a particular interaction with a virtual surface (for example, pushing a door).

It will also be appreciated that whilst the states in Figure 8 show the interactive element tracking the position of a virtual surface, for example at state 830, optionally the interactive element may be activated only or in addition in response to a notional collision between the user's hand and a virtual object, simply to provide the sensation of an impact.

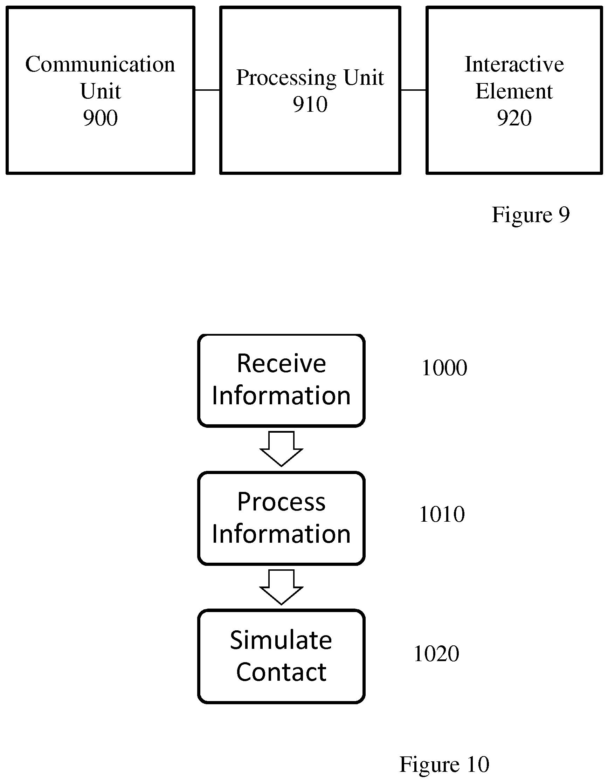

Figure 9 schematically illustrates a system, mountable upon a user's body, for simulating interaction with a virtual environment; that is, a robot such as that discussed above designed to mimic interactions with surfaces in a virtual environment. The system comprises a a processing unit 910, an interactive element 920, and optionally a communication unit 900.

While discussed here as being a self-contained system, it is considered that some of the functionality may also be distributed amongst one or more other devices. For example, the generating of instructions may be performed externally, and the instructions may be transmitted to the system via the communication unit 900. Similarly the communication unit itself may be part of a separate device, such as a Playstation Move controller. The controller comprises a USB port, and this may connect the controller to the robot, for example through to the processing unit 910, when the controller is seated/positioned in/with the robot as described elsewhere herein.

The communication unit 900 (whether integral or part of a separate unit) is operable to receive information relating to operation of the system; this may include, for example, positioning information and configuration information for the interactive element or instructions describing the operation of the system. This information may be received from any suitable device associated with the system - examples include a games console, input device, processing device and/or an HMD.

The processing unit 910 is operable to perform any processing or control that is required by the system. For example, the processing unit 910 may be operable to implement any instructions received via the communication unit 900. Alternatively, or in addition, the processing unit 910 may be operable to generate operation instructions in dependence upon the received information (the information received by the communication unit 900) for the system and/or the interactive element 920 in dependence upon information received via the communication unit 900.

The interactive element 920 is operable to simulate contact with a virtual surface in the virtual environment by moving relative to at least a predetermined part of the user's body in dependence upon the received information. In embodiments in which the processing unit 910 is operable to generate operation instructions in dependence upon the received information received via the communication unit 900, the interactive element 920 may be operable to implement instructions generated by the processing unit.

As was discussed with reference to Figure 8, the position of the interactive element may be dependent upon the relative positions of a user's avatar (or an equivalent) in the virtual environment and the virtual surface. That is to say that the interactive element is operable to occupy a position relative to a part of the user's body that corresponds to the relative positions of a corresponding virtual body part and the virtual surface.

In some embodiments, as noted above, the system is mountable on the user's body such that the interactive element 920 is operable to come into contact with the user's hand; this may require that the system is mountable on the user's arm, although it could instead be mounted upon an external object (such as a chair) or an alternative body part (such as the user's shoulder or chest) in other embodiments, the interactive element 920 may be operable to come into contact with the user's foot, for example. Such alternative mounting options may also be advantageous in that they may enable the system to be operable to restrict the motion of the user.

In the case of the user's foot, the robot may be worn in the sense that it is carried by the user when they perform at least some motions (such as raising the relevant foot), and for example attach to the user's shoe or ankle. However alternatively the robot may be a platform upon which the user stands. In this case the interactive element may extend towards the user's foot to indicate contact with a virtual surface. Optionally, more than one interactive element may be provided (e.g. one for each foot) and/or an interactive element may be mounted on a circular or arcuate track to enable it to simulate contact/impact from different directions or positions by moving to different positions relative to a user's foot.

The system may also include position and/or orientation sensors operable to monitor the motion of the system, such as accelerometers and/or gyroscopes. Measurements captured by these sensors may be used locally to vary the operation of the system, or may be transmitted to an associated processing device. Again, alternatively or in addition such sensors may be part of a separate controller such as the move controller if mounted in a substantially fixed manner relative to the robot.

The system may also include an air flow generation unit operable to generate an air flow within the system in response to the received information and/or detected motion of the system. An example of this, as discussed above, may be a fan that is operable to generate an air flow that may increase the sense of immersion that is experienced by the user.

In some embodiments, the system comprises one or more inwards-facing cameras operable to capture images of user motion. The cameras may be used to perform tracking for gesture recognition, for example, to enable a user to provide inputs to a processing system to control operation of a game or application.

The system may comprise one or more elements that may be controlled to allow a user to interact with external objects directly; for example, flaps or retractable elements that enable a user to pick up objects or press buttons freely.

It will be appreciated that applications for the robot include providing a sense of touch when interacting with a virtual environment (e.g. when pushing open a virtual door), or providing a sensation of impact for example in a boxing game, or football game.

Figure 10 schematically illustrates a method for simulating interaction with a virtual environment using a system mountable upon a user's body.

A first step 1000 comprises receiving information relating to operation of the system, for example from an associated processing device. This information may comprise information about the proximity of a user's hand and the virtual surface in the virtual environment, for example, or one or more instructions to control the operation of the system.

A second step 1010 comprises the processing of information received in step 1000. In some embodiments this step may not be required; for example, if the received information comprises a set of instructions for operation of the system that require no further processing.

A third step 1020 comprises simulating contact with a virtual surface in the virtual environment by moving an interactive element of the system relative to the user's body in dependence upon the received information.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

## Claims

1. A system, mountable upon a user's body, for simulating interaction with a virtual environment, the system comprising:
a communication unit operable to receive information relating to operation of the system; and
an interactive element operable to simulate contact with a virtual surface in the virtual environment by moving relative to the user's body in dependence upon the received information.

2. A system according to claim 1, comprising a processing unit operable to generate operation instructions in dependence upon the received information,
wherein the interactive element is operable to implement instructions generated by the processing unit.

3. A system according to claim 1, wherein the system is mountable on the user's body such that the interactive element is operable to come into contact with the user's hand.

4. A system according to claim 3, wherein the system is mountable on the user's arm.

5. A system according to claim 1, wherein the interactive element is operable to occupy a position relative to a part of the user's body that corresponds to the relative positions of a corresponding virtual body part and the virtual surface.

6. A system according to claim 1, wherein the interactive element is operable to be reconfigured to simulate properties of the virtual surface.

7. A system according to claim 6, wherein the reconfiguration comprises a change of one or more of the shape, size, and/or orientation of the part of the interactive element that is presented to the user.

8. A system according to claim 6, wherein the interactive element is operable to be reconfigured further in response to a user interaction with the virtual surface and/or interactive element.

9. A system according to claim 1, wherein the system is operably coupled to a separate controller.

10. A system according to claim 9, wherein the communication unit of the system is provided by the separate controller.

11. A system according to claim 1, comprising one or more inwards-facing cameras operable to capture images of user motion.

12. A system according to claim 1, comprising one or more elements that may be controlled to allow a user to interact with external objects directly.

13. A method for simulating interaction with a virtual environment using a system mountable upon a user's body, the method comprising:
receiving information relating to operation of the system; and
simulating contact with a virtual surface in the virtual environment by moving an interactive element of the system relative to the user's body in dependence upon the received information.

14. Computer software which, when executed by a computer, causes the computer to carry out the method of claim 13.

15. A non-transitory machine-readable storage medium which stores computer software according to claim 14.
